**Europäisches Patentamt**

**European Patent Office**

**Office européen des brevets**

(11) Veröffentlichungsnummer: **0 662 730 A1**

(12) **EUROPÄISCHE PATENTANMELDUNG**

(21) Anmeldenummer: **94120586.6**

(22) Anmeldetag: **23.12.94**

(51) Int. Cl.6: **H01M 10/42,** H01M 2/10, H01M 2/34, G01R 31/36

(30) Priorität: **23.12.93 DE 9319881 U**

(43) Veröffentlichungstag der Anmeldung: **12.07.95 Patentblatt 95/28**

(84) Benannte Vertragsstaaten: **AT CH DE DK FR GB IT LI NL SE**

(71) Anmelder: **HUGO JUNKERS WERKE GmbH Hermann-Löns-Strasse 13 D-82216 Gernlinden (DE)**

(72) Erfinder: **Schwaiger, Heinz Hirtenstrasse 2 D-85386 Eching (DE)**

(74) Vertreter: **Tiedtke, Harro, Dipl.-Ing. Patentanwaltsbüro Tiedtke-Bühling-Kinne & Partner Bavariaring 4 D-80336 München (DE)**

(54) **Mobile elektrochemische Energiezelle.**

(57) Die mobile Energiezelle besteht aus einer Batterie (1) mit mindestens zwei auf der Oberseite der Batterie angeordneten Anschlußpolen (1a, 1b) und einem an der Batterie (1) fixierbaren Aufsatz (2), der eine mit mindestens einem der Anschlußpole (1a, 1b) elektrisch verbundene selbsttätige Schutzschaltung (3), einem von außen zugänglichen, mit den Anschlußpolen (1a, 1b) und der Schutzschaltung (3) elektrisch verbundenen Anschluß (4) sowie einer mit den Anschlußpolen (1a, 1b) elektrisch verbundene Kontrollvorrichtung (5) aufweist, die Kontrollsignale abgibt.

Mit dieser mobilen Energiezelle ist eine hohe Betriebssicherheit bei einfacher Handhabung gewährleistet.

FIG. 1

Die Erfindung bezieht sich auf eine mobile Energiezelle gemäß dem Oberbegriff des Anspruchs 1.

Mobile Energiezellen werden beispielsweise zur Versorgung von elektrohydraulischen Rettungsgeräten, Reanimationsgeräten, Suchscheinwerfern, Funkgeräten u. ä. verwendet. Ein weiterer Anwendungsfall betrifft den Werkzeugbereich. Ferner können solche mobilen Energiezellen im Baustellenbereich eingesetzt werden.

Eine gattungsgemäße mobile Energiezelle ist beispielsweise aus der DE - GM 76 13 776 bekannt.

Diese herkömmliche mobile Energiezelle besteht aus einer Batterie, die zwei Anschlußpole aufweist, über die Strom an Verbraucher abgegeben wird. Der Verbraucher wird über Batterieklemmen mit den Anschlußpolen verbunden. Üblicherweise sind die Anschlußpole der Batterie auf der Oberseite angeordnet. Die Betriebssicherheit und Handhabung einer herkömmlichen mobilen Energiezelle ist jedoch nicht immer zufriedenstellend.

Der Erfindung liegt die Aufgabe zugrunde eine mobile Energiezelle gemäß dem Oberbegriff des Anspruchs 1 so weiterzubilden, daß eine verbesserte Betriebssicherheit bei einfacher Handhabung gewährleistet ist.

Diese Aufgabe wird erfindungsgemäß mit den im kennzeichnenden Teil des Anspruchs 1 angegebenen Merkmalen gelöst.

Vorteilhafte Weiterbildungen sind in den Unteransprüchen definiert.

Erfindungsgemäß ist bei der mobilen Energiezelle ein Aufsatz an der Batterie fixierbar, der neben einer Schutzschaltung auch /30 eine Kontrollvorrichtung sowie einen Anschluß aufweist. Mit der Schutzschaltung wird sowohl die Batterie selbst als auch ein angeschlossener Verbraucher vor Beschädigung geschützt, so daß die Betriebssicherheit erheblich verbessert wird. Da die Schutzschaltung selbsttätig aktivierbar ist, wird die Handhabung der mobilen Energiezelle erheblich vereinfacht, da ein Benutzer nicht mehr auf Unregelmäßigkeiten achten muß. Über die Signale abgebende Kontrollvorrichtung können Daten der mobilen Energiezelle überprüft werden, so daß die Betriebssicherheit und die Handhabung der Energiezelle gesteigert wird. Der von außen zugängliche Anschluß ermöglicht ein einfaches Verbinden der Energiezelle mit einem Verbraucher.

Gemäß einer vorteilhaften Weiterbildung werden die Batterie und der Aufsatz durch eine Ummantelung umhüllt, die die Energiezelle kompakt oder teilweise umschließt und vor externen Einflüssen schützt.

In der Weiterbildung gemäß Anspruch 3, werden die Batterie und der Aufsatz zum Schutz gegen ein Verrutschen des Aufsatzes mit zwei Schraubverbindungen fixiert.

Die Weiterbildungen der Ansprüche 4 und 5 betreffen vorteilhafte Ausgestaltungen des Anschlusses. Der Anschluß ist als Flachsteckdose ausgebildet, die mit einer Sicherung gegen Verpolung geschützt ist.

In den Ansprüchen 6 bis 8 wird die Kontrollvorrichtung weitergebildet, so daß mit ihr auf Tastendruck der Ladezustand der Batterie über drei geschützt angeordnete Leuchtdioden (grün, gelb und rot) abgelesen werden kann. Der Benutzer kann sich dadurch jeweils aktuell über den Betriebszustand der mobilen Energiezelle informieren und gegebenenfalls die Batterie aufladen. Sollte nicht genügend Zeit zum Aufladen vorhanden sein, kann er stattdessen eine andere mobile Energiezelle auswählen, deren Ladezustand ausreichend erscheint.

Gemäß der Weiterbildung in Anspruch 9 soll die mobile Energiezelle über schnell lösbare Schraubverbindungen einfach und schnell zerlegbar sein, so daß ein Batterieaustausch nicht zu einer zeitraubenden Tätigkeit führt.

Ein besonderes Augenmerk gilt den Weiterbildungen der Ansprüche 10, 11 und 12, nach denen u. A. die Schutzschaltung einen Unterspannungsschutz bildet, der einerseits eine Tiefentladung der Batterie verhindert und somit ein häufiges Wiederverwenden der Batterie gewährleistet. Andererseits wird durch den Unterspannungsschutz auch ein angeschlossener Verbraucher geschützt. Beispielsweise wird bei einem Elektromotor verhindert, daß die Wicklungen durchbrennen, wenn der Motor aufgrund zu niedriger Spannung anhält, aber weiterhin Strom fließt. Durch den beim Einstecken des Verbrauchers nacheilenden und beim Austecken voreilenden Kontakt für die Steuerschaltung wird ein Kontaktabbrand der Kontakte der Steckdose verhindert. Die zeitverzögerte Betätigung der Schutzschaltung gewährleistet, daß der Stromkreislauf nach dem Einschalten des Verbrauchers nicht aufgrund eines kurzzeitigen Spannungsabfalls unterbrochen wird. Es soll besonders hervorgehoben werden, daß zum Laden der Batterie der Aufsatz nicht abgenommen werden muß, sondern entweder der Anschluß verwendet werden kann oder eine eigene genormte Ladebuchse vorhanden ist. Diese kann auch für Verbraucher mit geringer Leistung verwendet werden.

Die Weiterbildungen der Ansprüche 13 und 14 betreffen eine zusätzliche Wanne. Mit dieser Wanne wird die Energiezelle nicht nur gegen mechanische und thermische Einflüsse geschützt, sondern sie dient auch dazu im Extremfall eventuell austretende Batterieflüssigkeit aufzufangen. Der Benutzer kommt somit mit der ätzenden Flüssigkeit sicher nicht in Berührung.

Schließlich soll noch auf eine Weiterbildung hingewiesen werden, nach der eine Vielzahl von Batterien innerhalb der mobilen Energiezelle zum Einsatz kommen. Durch Parallelschaltung der Batterien ergibt sich eine Erhöhung der Kapazität der mobilen Energiezelle. Durch Reihenschaltung läßt sich die Spannung der mobilen Energiezelle erhöhen (beispielsweise von 12 auf 24 Volt).

Die Erfindung wird nachfolgend anhand eines bevorzugten Ausführungsbeispiel unter Bezugnahme auf die Zeichnungen näher erläutert.

Es zeigen:

Fig. 1 eine teilgeschnittene Vorderansicht eines Ausführungsbeispiels der Energiezelle,

Fig. 2 eine teilgeschnittene Seitenansicht des Ausführungsbeispiels der Energiezelle gemäß der Fig. 1,

Fig. 3 eine teilgeschnittene Draufsicht des Ausführungsbeispiels der Energiezelle gemäß den Fig. 1 und 2 ,

Fig. 4 ein elektrisches Prinzipschaltbild der Energiezelle und

Fig. 5 ein abgewandeltes elektronisches Prinzipschaltbild der Energiezelle und

Fig. 6 den Gesamtschaltplan des Ausführungsbeispiels von Fig. 5.

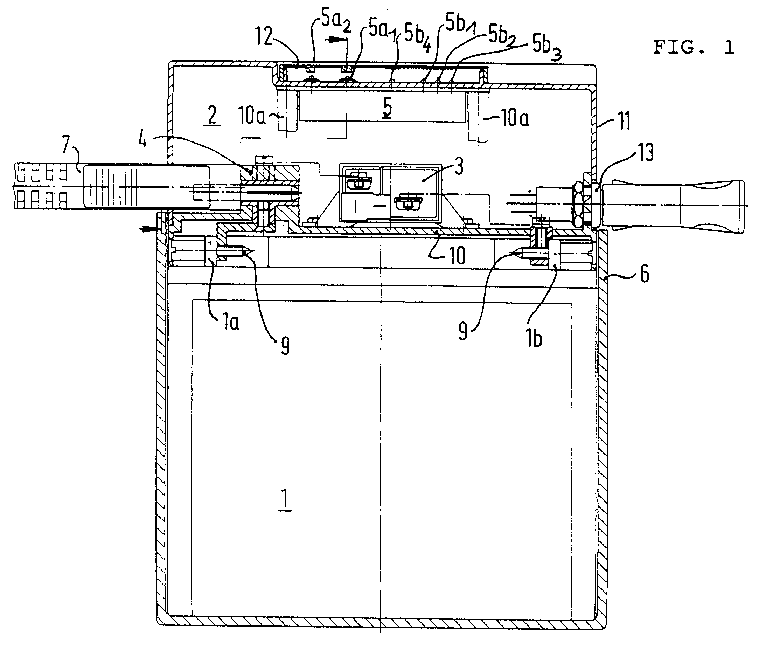

Das bevorzugte Ausführungsbeispiel ist in seinem mechanischen Aufbau in den Fig. 1 bis 3 dargestellt.

Wie in Fig. 1 gezeigt ist, weist die mobile Energiezelle eine Batterie 1 auf. Im gezeigten Ausführungsbeispiel ist die Batterie vorzugsweise eine wiederaufladbare, wartungsfreie, gekapselte und auslaufsichere Dünnplattenbleibatterie mit hochsaugfähigen Separatoren. Die Separatoren zwischen den Bleiplatten sind durch Vlies gebildet, die Batterieflüssigkeit aufsaugen. Der besondere Vorteil dieser Art von Batterien besteht darin, daß durch den Vlies bedingt die Batterieflüssigkeit selbst dann nicht ausläuft, wenn das Batteriegehäuse beschädigt ist, weil der saugfähige Vlies erst dann die Batterieflüssigkeit abgeben würde, wenn er zusammengedrückt wird. Im gezeigten Ausführungsbeispiel kommt eine Batterie 1 mit 17 Ah Leistung bei ca. 12 V Spannung zum Einsatz. Die Batterie 1 weist an ihrer Oberseite zwei Anschlußpole 1a und 1b auf, wobei einer 1a der Pole den Pluspol und der andere 1b den Minuspol bildet.

Neben der erwähnten Bleibatterien können auch alle anderen Batterien wie beispielsweise Nickel-Cadmium-Batterien oder Metall-Hybrid-Akkus etc. eingesetzt werden. Außerdem können auch mehrere Batterien 1 für die mobile Energiezelle vorgesehen sein. Wenn mehrere Batterien 1 verwendet werden, können diese entweder parallel zur Kapazitätserhöhung oder seriell zur Spannungserhöhung geschaltet sein.

Wie in Fig. 1 zu erkennen ist, sind die Anschlußpole 1a, 1b in einer Vertiefung an der Oberseite gegenüber der oberen Abschlußfläche tiefer versetzt angeordnet. Die Batterie 1 ist im wesentlichen quaderförmig, wobei die Oberseite mit den Anschlußpolen 1a und 1b durch die kleinste Seitenfläche des Quaders gebildet ist. Die Anschlußpole 1a und 1b ragen als Bolzen nach oben, so daß deren Oberseite im wesentlichen mit der Oberseite eines Gehäuses der Batterie 1 abschließt. Die Anschlußpole 1a und 1b sind ferner jeweils mit einer Querbohrung versehen.

Der obere Teil des Gehäuses der Batterie 1 ist stufenförmig auf dem unteren Teil des Gehäuses angeordnet und bildet einen kleinen Absatz. Auf diesen Absatz der Batterie 1 stützt sich ein Aufsatz 2, der von oben auf die Batterie 1 aufgesetzt und dort fixiert ist. Der Aufsatz 2 weist eine Bodenplatte 10 auf, die auf dem Absatz der Batterie 1 aufliegt und den Aufsatz 2 gasdicht von der Batterie trennt. Außerdem weist der Aufsatz 2 eine Haube 11 auf, die auf die Bodenplatte 10 aufsetzbar ist.

Der Aufsatz 2 stützt sich auf die Batterie 1 so, daß nicht gezeigte nach oben führende Notentlüftungsventile der Batterie 1 nicht verstopft oder abgedeckt werden. D. h. es verbleibt ein Freiraum über den Notentlüftungsventilen der Batterie 1, durch die bei unsachgemäßem Laden der Batterie 1 oder bei Überhitzung der Batterie ungehindert Batteriegase ausdringen können.

Die Bodenplatte 10 ist dünnwandig ausgebildet und hat ebenfalls im wesentlichen Quaderform, wobei die Bodenplatte 10 die quaderförmige Batterie mit gleichen Grundrißabmessungen nach oben fortsetzt. Im gezeigten Ausführungsbeispiel ist die Bodenplatte 10 aus Kunstoff hergestellt. Die Seitenwände der Haube 11 führen die Grundrißabmessungen ebenfalls fort und sind durchgehend, d. h. ohne großflächige Unterbrechungen oder Aussparungen. Dadurch sind die im Aufsatz 2 untergebrachten Bauteile nach außen gut geschützt. Der Aufsatz 2 kann jedoch aus beliebigen anderen Materialien hergestellt sein. Den besonderen Vorzug wegen der Isoliereigenschaften und der Unempfindlichkeit gegen mechanische Einflüsse hat jedoch Kunststoff.

Die Bodenplatte 10 dient weiterhin der Montage einer Schutzschaltung 3 in der Mitte zwischen den beiden Anschlüssen 1a und 1b der Batterie 1

Die Schutzschaltung 3 ist als Unterspannungsschutz mit Zeitverzögerung und Anzeige vorgesehen.

Ein elektrischer Anschluß 4 ist an der Bodenplatte 10 befestigt. Ferner ist an der Bodenplatte 10 eine genormte Ladebuchse 13 vorgesehen, an die sowohl ein Ladegerät als auch Hilfsgeräte zur Stromentnahme und weitere Kleinverbraucher anschließbar sind. Sowohl der elektrische Anschluß 4 als auch die Befestigung für die Ladebuchse 13 sind mit an die Bodenplatte 10 angespritzt bzw. umspritzt.

Ebenso ist beispielsweise die Befestigung der Schutzschaltung 3 miteingespritzt. Im gezeigtem Ausführungsbeispiel ist der elektrische Anschluß 4 als Flachsteckdose mit einer Sicherung gegen Verpolung ausgebildet. Die Kontakte der Flachsteckdose werden beim Spritzen mit an die Bodenplatte 10 eingeformt. Die Flachsteckdose weist an ihrer Außenseite zwei vertikal verlaufende einander gegenüberliegende Nuten auf, in die zwei Verriegelungszungen eines passenden Flachsteckers einrastbar sind.

Die Haube 11 weist eine Aussparung an einer seiner kleinsten Quaderseitenfläche auf, durch die der im Innenraum des Aufsatzes 2 angeordnete Anschluß 4 von außen zugänglich ist. Der Anschluß 4 wird von der Seite her bedient. Die Ladebuchse 13 liegt auf der gegenüberliegenden Seite und ist ebenfalls durch eine Aussparung in der Haube von außen zugänglich. Die Bodenplatte nimmt die mechanische Belastung beim Betätigen des Anschlusses 4 und der Ladebuchse 13 auf.

Auf der Innenseite des Aufsatzes der oberen Abschlußwand der Haube 11 ist eine Kontrollvorrichtung 5 angeordnet, die auf vier an der Bodenplatte 10 angeformten, nach oben ragenden Säulen 10a aufliegt und die Kontrollsignale über eine optische Anzeige 5b abgibt. Die obere Abschlußwand der Haube 11 ist in diesem Bereich nach innen bzw. unten versetzt, so daß die die Haube 11 durchdringende, optische Anzeige 5b in einem gegenüber der Oberseite der Haube 11 versenktem Bereich liegt. Im gezeigten Ausführungsbeispiel besteht die optische Anzeige 5b aus insgesamt vier verschiedenfarbigen Dioden 5b. Eine der Dioden 5b wird auch als Anzeige für die Schutzschaltung 3 verwendet. Zusätzlich sind zwar nach oben nicht über die Oberseite der Haube 11 ragende Taster 5a der Kontrollvorrichtung 5 in dem versenkten Bereich vorgesehen, der dadurch vor mechanischer Beschädigung geschützt ist. Die technische Funktion der Kontrollvorrichtung 5 besteht in einer Ladezustandskontrcllanzeige, die über den Taster 5a abgerufen wird und anhand der verschiedenfarbigen Dioden 5b abgelesen werden kann, sowie einem Unterspannungsschutz mit Diode und Resettaster.

Der Aufsatz 2 und die Batterie 1 sind durch zwei Verschraubungen 9 aneinander fixiert.

Die Verschraubungen 9 werden direkt mit den Anschlußpolen 1a und 1b der Batterie 1 verbunden und halten die Bodenplatte 10 an der Batterie 1. Die Verschraubungen 9 stellen also die elektrischen Kontakte des Aufsatzes 2 dar und erfüllen auch eine mechanische Haltefunktion. Die Verschraubungen 9 sind an der Bodenplatte 10 befestigt und mit den Kontakten des elektrischen Anschlußes 4 und der Ladebuchse 13 elektrisch verbunden. Im gezeigten Ausführungsbeispiel ragen Stifte aus der Bodenplatte 10 nach unten vor, ohne über die Seitenrißfläche der Bodenplatte 10 überzustehen. Die Stifte sind mit Innengewinden versehen, in die zwei von außen zugängliche Fixierschrauben einschraubbar sind, welche Durchtritte in den Anschlußpolen 1a und 1b der Batterie 1 durchdringen.

Der Aufsatz 2 muß nicht zwingend einen geschlossenen Innenraum bilden, sondern kann gerüstartig ausgebildet sein.

Vorzugsweise werden der Aufsatz 2 und die Batterie 1 teilweise oder vollständig von einer Ummantelung 6 umhüllt. Im gezeigten Ausführungsbeispiel ist die Ummantelung 6 als offene Tasche 6 vorgesehen, in welcher die Energiezelle eingesteckt und mit einer Rundkopfschraube 8 gesichert wird. Die Tasche 6 weist vorzugsweise nicht gezeigte Trageeinrichtungen wie einen Griff oder ein Umhängeband auf. Sie kann beispielsweise aus Leder gefertigt sein.

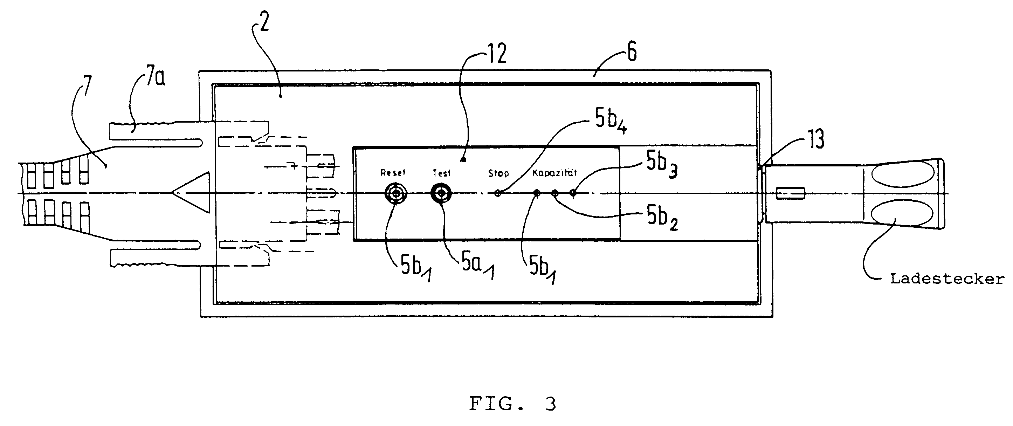

Die nach oben offene Tasche 6 erstreckt sich nur so hoch, daß der elektrische Anschluß 4 und die Ladebuchse 13 frei bleiben. An der Oberseite der Tasche 6 ist in dem Bereich, in dem der Taster 5a und die Dioden 5b vorgesehen sind, ein in Fig. 1 und 3 gezeigtes flexibles Fenster 12 vorgesehen, so daß die Kontrollvorrichtung 5 von außen betätigbar und ablesbar ist.

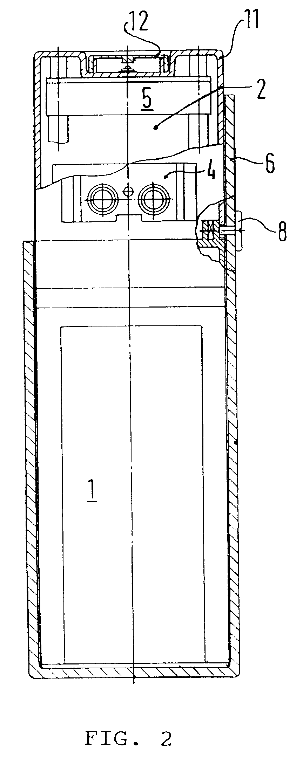

Wie am besten aus Fig. 2 zu erkennen ist, ist der Anschluß 4 als Flachsteckdose 4 ausgebildet, in die ein dargestellter Stecker eines Verbraucher eingesteckt werden kann. Die Steckdose weist drei Pole bzw. Kontakte auf. Einer der drei Kontakte ist so ausgeführt, daß beim Ausstecken des Steckers zunächst dieser Kontakt und danach die beiden anderen Kontakte verbunden werden. Das Einstecken erfolgt in umgekehrter Reihenfolge. Dieser Kontakt ist mit der Schutzschaltung 3 verbunden. Zur Sicherung der Verbindungsfestigkeit zwischen dem Stecker und der Steckdose 4 ist der Stecker 7 mit zwei Verrigelungszungen 7a versehen. Beim Herausziehen des Steckers werden diese Verriegelungszungen durch einfaches Drücken auf das gegenseitige Ende aus ihrer Verriegelung gelöst.

Die elektrische Verbindung des Aufsatzes 2 mit den Anschlußpolen 1a und 1b erfolgt über die bereits erwähnten , schnell lösbaren Schraubverbindungen 9. Beim Tausch der Batterie 1 können die Schraubverbindungen 9 schnell gelöst, und der Aufsatz 2 von der Batterie 1 abgehoben werden.

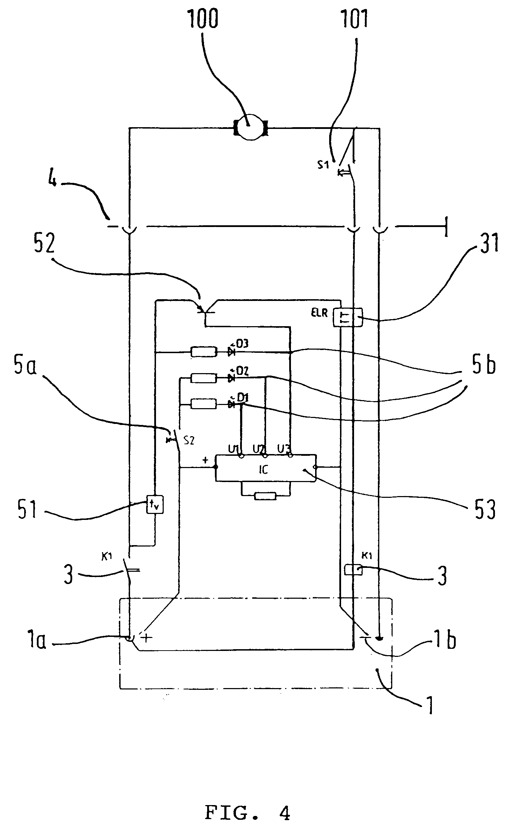

Der elektrische Schaltplan, wie er im gezeigten Ausführungsbeispiel verwirklicht ist, wird anhand der Fig. 4 näher erläutert. Es soll ausdrücklich darauf hingewiesen werden, daß die Erfindung nicht auf diesen Schaltplan beschränkt sein soll. Die Schaltung wird nur beispielhaft als besonders bevorzugte Ausführungsform beschrieben.

Wie in Fig. 4 dargestellt ist, sind die Anschlußpole 1a und 1b der Batterie 1 über die Steckdose 4 mit einem Verbraucher 100 verbunden. Alternativ dazu kann die Steckdose 4 auch eine Verbindung zu einem Ladegerät oder Batterietestgerät herstellen. Es ist zu erkennen, daß die Steckdose 4 dreipolig ausgeführt ist.

Zunächst soll die Funktionsweise der Kontrollvorrichtung 3 näher erläutert werden. Im Ruhezustand, d. h. wenn kein Verbraucher 100 angeschlossen ist, kann eine Überwachung der Batteriespannung vorgenommen werden, indem der Taster 5a (S2) betätigt wird. Bei Betätigung dieses Tasters 5a wird die Batteriespannung mit Referenzspannungen U1 und U2 eines IC's 53 verglichen. Je nach Wert der Leerlaufspannung bzw.Güte des Ladezustands der Batterie 1 wird eine grüne Diode D1 der optischen Anzeige 5b oder eine gelbe Diode D2 angesteuert. Wenn die Batteriespannung im Nennbereich liegt, leuchtet die grüne Diode D1. Liegt die Batteriespannung unter 95% der Batteriespannung wird die gelbe Diode D2 aktiviert. Bei Aufleuchten der gelben Diode D2 kann erkannt werden, daß die Batterie nachgeladen werden muß.

Ein Batterietest unter Last kann von einem externen Testgerät durchgeführt werden, das an den Anschluß 4 angeschlossen werden kann. Im wesentlichen besteht ein derartiges Testgerät aus einem Widerstand, der einen Strom von etwa 50 A fordert, und einer Steuer- bzw. Auswertelektronik. Die Schaltung dieses Stromes wird durch das Schütz K1 der Schutzschaltung 3 vorgenommen. Mit einem Taster im Testgerät wird das Schütz K1 angesteuert und automatisch ca. 30 Sekunden gehalten. Während dieser Zeit wird der Spannungsabfall gemessen und der Endwert angezeigt. Wesentlich sind der Lastwiderstand, die Zeitmessung und der Spannungsendwert. Bei Bedarf können graphische Ausgaben oder Prüfprotokollausgaben vorgesehen sein.

Desweiteren soll die Funktion der Schutzschaltung 3 und der dreipoligen Steckdose 4 aufgezeigt werden. Der dritte Kontakt, der zuvor als nacheilend beim Einstecken und voreilend beim Ausstecken beschrieben wurde, ist mit einem Ein/Ausschalter 101 (S1) am Verbraucher 100 und mit einem Schütz K1 der Schutzschaltung 3 über eine Steuerleitung verbunden. Die Steuerleitung führt weiter zum Pluspol der Batterie 1. Beim Einschalten des Verbrauchers durch Betätigen des Ein/Ausschalters 101 wird das Schütz K1 der Kontrollvorrichtung 3 betätigt und verbindet den Pluspol 1a der Batterie 1 mit dem Verbraucher 100. Da die Steuerleitung den beim Einstecken nacheilenden Kontakt in der Steckdose 4 belegt, kann beim Einstecken eines schon eingeschalteten Verbrauchers 100 ein Kontaktabbrand verhindert werden. Ebenso ist der Kontaktabbrand beim Ausstecken verhindert.

Gleichzeitig mit dem Stromfluß wird durch das Zeitglied 51 ($t_v$) verzögert die Batteriespannung der Batterie 1 mit der Referenzspannung U3 am IC 53 verglichen. Bei Unterschreiten der Referenzspannung wird die Diode D3 der optischen Anzeige 5b aktiviert, die parallel zu einem Transistor 52 geschaltet ist. Gleichzeitig wird über den Transistor 52 ein Lastrelais 31 (ELR) aktiviert, das die Steuerleitung des Schütz K1 der Kontrollvorrichtung 3 unterbricht. Durch das Schütz K1 wird die Zuleitung zum Verbraucher 100 unterbrochen. Sowohl der Verbraucher 100 als auch die Batterie 1 sind dadurch vor Unterspannung geschützt.

Obwohl beim gezeigten Ausführungsbeispiel der Verbraucher und die mobile Energiezelle zwei von einander getrennte Bauteile sind, kann die Batterie 1 und der Aufsatz 2 direkt an den Verbraucher angeflanscht sein.

Als Schutz gegen auslaufende Batterieflüssigkeit kann eine zusätzliche, nicht gezeigt Wanne vorgesehen sein, die sich um die Batterie 1 und den Aufsatz 2 erstreckt und aus flüssigkeitsdichtem Material gefertigt ist. Diese Wanne schützt die mobile Energiezelle zudem vor mechanischen und thermischen Einflüssen.

Abschließend soll noch darauf hingewiesen werden, daß durch eine entsprechende Auslegung des Zeitglieds 51, des Transistors 52 und des Lastrelais 31 auch ein externer Kuzschluß beispielsweise am Verbraucher 100 erfaßbar ist und zu einer Abschaltung führt.

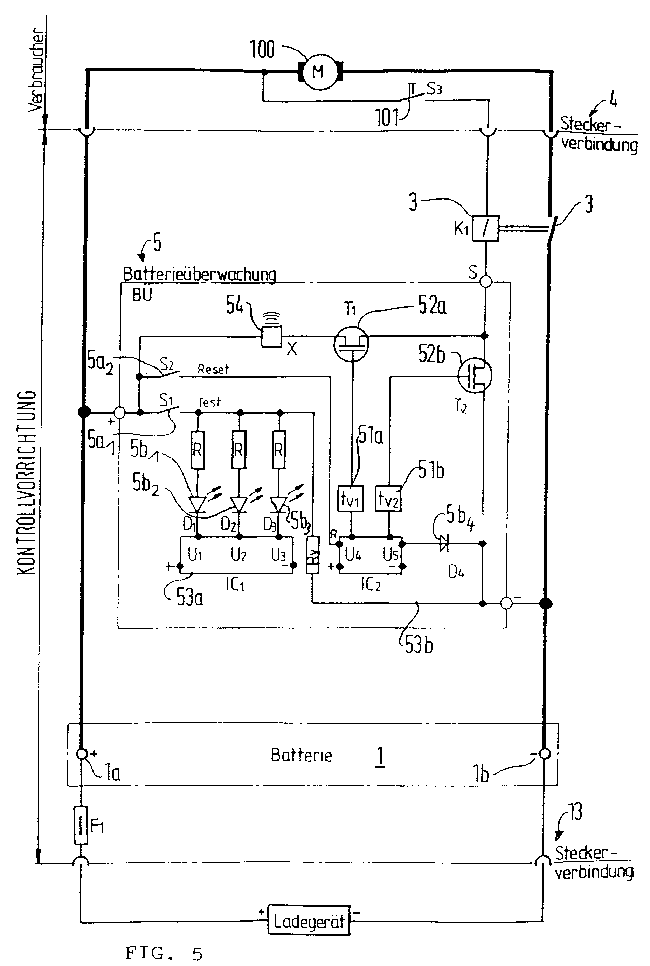

In Fig. 5 ist eine Abwandlung des elektrischen Schaltbildes gemäß einem anderen Ausführungsbeispiel näher beschrieben.

Gemäß Fig. 5 ist ein Verbraucher 100 über Anschlußpole 1a und 1b mit der Batterie 1 verbunden, der ähnlich wie gemäß Fig. 4 über einen Ein-/Ausschalter 101 ein- bzw. ausgeschaltet wird. Außerdem kann ein Ladegerät über eine Steckerverbindung bzw. Ladebuchse 13 an die Anschlußpole 1a und 1b angeschlossen sein, das parallel zu dem Verbraucher 100 geschaltet ist und zusätzlich durch eine Sicherung $F_1$ geschützt ist. Alternativ kann auch ein Kleinverbraucher, beispielsweise eine Leuchte, mit einer Leistung von beispielsweise 10 W an die Anschlußpole 1a und 1b der Batterie 1 angeschlossen sein.

Wie das Ausführungsbeispiel gemäß Fig. 4 weist auch dieses Ausführungsbeispiel eine Testfunktion auf, die nachstehend näher beschrieben wird. Mit einem Prüftaster $5a_1$ und einem Prüfwiderstand $R_v$ kann eine Ladezustandüberprüfung im Ruhezustand, d.h. wenn kein Verbraucher 100 angeschlossen ist, durchgeführt werden, deren Ergebnis durch eine Anordnung von drei Leuchtdioden $5b_1$, $5b_2$ und $5b_3$ angezeigt

wird. Bei Betätigung des Prüftasters $5a_1$ wird der Prüfwiderstand $R_v$ an die Batterie 1 angeschlossen, so daß über diesen Prüfwiderstand $R_v$ ein Strom fließt, der einer zehnstündigen Entladekennlinie (I 10) entspricht. Dies führt zu einem Spannungsabfall, der durch einen integrierten Schaltkreis 53a ausgewertet wird, indem der Spannungsabfall mit Referenzspannungswerten $U_1$, $U_2$ und $U_3$ verglichen wird. Die Referenzspannungswerte $U_1$, $U_2$ und $U_3$ sind auf die entsprechenden Werte der drei Leuchtdioden $5b_1$, $5b_2$ und $5b_3$ in den Farben Grün, Gelb und Rot eingestellt. Befindet sich die Spannung der Batterie 1 im Bereich von ungefähr 95 bis 100 % der Nennspannung, so wird die grüne Leuchtdiode $5b_1$ angesteuert. Befindet sich die Spannung der Batterie 1 im Bereich von ungefähr 80 bis 95 % der Nennspannung, so wird die gelbe Leuchtdiode $5b_2$ angesteuert. Liegt die Spannung der Batterie 1 unter 80 % der Nennspannung, so wird die rote Leuchtdiode $5b_3$ angesteuert. Auf diese Weise kann erkannt werden, daß die Batterie 1 nachgeladen werden muß.

Der Prüftaster $5a_1$ wird nur während des Meßvorgangs betätigt. Eine Betätigung des Prüftasters $5a_1$ für eine Zeit, die länger als nötig ist, würde zu einer starken Erwärmung des Prüfwiderstands $R_v$ und damit zu einer automatischen Unterbrechung durch eine (nicht dargestellte) wärmeempfindliche Sicherung führen, die zum Schutz der Kontrolleinrichtung 5 vor den Prüftaster $5a_1$ geschaltet ist.

Wie bei dem vorangegangenen Ausführungsbeispiel kann auch ein Batterietest unter Last von einem externen Testgerät ausgeführt werden, das an den elektrischen Anschluß 4 angeschlossen wird. Ein Schütz K1 einer Schutzschaltung 3 wird über einen Taster im Testgerät angesteuert und automatisch für ungefähr 30 Sekunden gehalten. Wie bei dem vorangegangenen Ausführungsbeispiel wird der Spannungsabfall gemessen und der Endwert angezeigt.

Außerdem können auch in diesem Fall graphische Ausgaben oder Prüfprotokollausgaben vorgesehen sein.

Nachstehend wird auch unter Bezugnahme auf Fig. 5 die Betriebsüberwachung beschrieben, die als Unterspannungsschutz dient. Bei Inbetriebnahme des Verbrauchers 100 durch Betätigung des Ein-/Ausschalters 101 wird automatisch eine permanente Spannungsüberwachung durch die Kontrolleinrichtung 5 ausgeführt. Der dritte Kontakt, der beim Einstecken nacheilend und beim Ausstecken voreilend ist, ist über den Ein-/Ausschalter 101 mit dem Verbraucher 100 und über die Spule des Schützes K1 mit einer Kontrolleinrichtung 5 verbunden. Wie vorstehend beschrieben kann dadurch, daß die Steuerleitung den beim Einstecken nacheilenden Kontakt in der Steckdose 4 belegt, ein Kontaktabbrand verhindert werden, wenn ein eingeschalteter Verbraucher 100 ein- oder ausgesteckt wird.

Wenn an einem Anschluß eines integrierten Schaltkreises 53b eine frei zu wählende Schwellspannung U4 (beispielsweise 9 V) erreicht wird, wird nach einer Verzögerung von beispielsweise 3 Sekunden, die durch ein Zeitglied $t_{v1}$ bzw. 51a verursacht wird, ein Transistor $T_1$ bzw. 52a leitend geschaltet, der beispielsweise ein MOSFET, d.h. ein MOS-Feldeffekttransistor sein kann. Dadurch wird durch einen Summer X bzw. 54 ein akustisches Dauersignal erzeugt. Wird an einem anderen Anschluß des integrierten Schaltkreises 53b eine Schwellspannung U5 (beispielsweise 8 V) erreicht, die ebenfalls frei wählbar ist, wird nach einer Verzögerung von beispielsweise 3 Sekunden, die durch ein Zeitglied 51b verursacht wird, durch den integrierten Schaltkreis 53b ein Transistor $T_2$ bzw. 52b gesperrt, wenn der niedrige Spannungspegel noch anliegt. Der Transistor $T_2$ bzw. 52b kann ebenfalls ein MOS-Feldeffekttransistor sein. Dadurch fällt das Schütz K1 ab und der Verbraucher 100 wird von der Batterie 1 getrennt. Außerdem werden gleichzeitig das akustische Dauersignal ausgeschaltet, das durch den Summer X bzw. 54 erzeugt wird, und über einen weiteren Anschluß des integrierten Schaltkreises 53b eine rote Leuchtdiode $5b_4$ eingeschaltet.

Die Trennung des Verbrauchers 100 von der Batterie 1 bleibt bei Abschalten des Verbrauchers 100 bestehen, d.h. sie hält sich selbst. Durch einen Rückstelltaster $5a_2$ ("Reset") kann die Kontrolleinrichtung 5 zurückgesetzt werden. Außerdem kann die Rücksetzung auch automatisch durch die Kontrolleinrichtung 5 erfolgen, wenn die Batterie wiederaufgeladen wird.

Zum Schutz der Kontrolleinrichtung 5 ist eine (nicht dargestellte) Sicherung vorgesehen, die vor den Summer X bzw. 54 geschaltet ist.

Darüber hinaus kann durch eine geeignete Wahl des Referenzspannungswertes U5 des integrierten Schaltkreises 53b in Verbindung mit dem Zeitglied $t_{v2}$ bzw. 51b und dem Transistor $T_2$ auch ein externer Kurzschluß erfaßt werden, der beispielsweise an dem Verbraucher 100 einen Spannungsabfall erzeugt und zu einer Abschaltung führt.

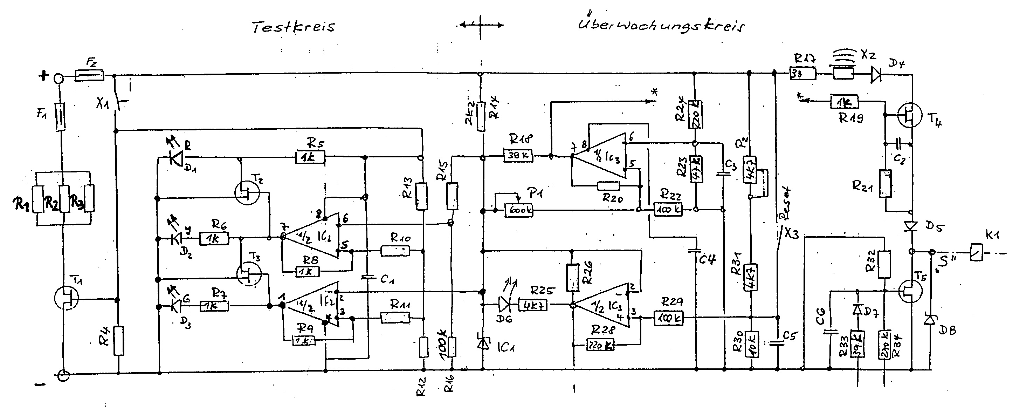

Fig. 6 zeigt den Gesamtschaltplan der Ausführungsform von Fig. 5 im Detail, während Fig. 5 nur den prinzipiellen elektrischen Aufbau zeigt.

Bezugszeichenliste von Fig. 6

| ANZAHL | POSITION | ART | TYP | | RASTER |
|---|---|---|---|---|---|
| 1 | IC 1 | REFERENZ | LM 336-5,0 | | SOT 92 |
| 1 | IC 2 | OPV | LM 358 N | | DIP 08 |
| 1 | IC 3 | KOMPARATOR | LM 393 | | DIP 08 |
| 3 | T2,3,4 | MOSFET | BS 170 | | SOT 92 |
| 1 | T1 | MOSFET | RFP 50N06 | | TO 220 |
| 1 | T5 | MOSFET | IRFL 540 | | TO 220 |
| 1 | D8 | ZENER | ZPD 33 | | RM 10,16 |
| 1 | D4 | ZENER | ZPD 3V3 | | RM 10,16 |
| 2 | D5 D7 | DIODE | 1N4148 | | RM 10,16 |
| 1 | D1 | LED 3mm rot | | | RM 2,54 |
| 1 | D2 | LED 3mm gelb | | | RM 2,54 |
| 1 | D3 | LED 3mm grün | | | RM 2,54 |
| 1 | D6 | LED 3mm rot low current | | | RM 2,54 |
| 4 | C4 C1 C3 C5 | FOLIENKOND. | 100 nF/63V | | RM 5,08 |
| 1 | C2 | FOLIENKOND. | 10 nF/63V | | RM 5,08 |
| 1 | C6 | ELKO RADIAL | 47 µF/25V | | RM 3,81 d≈5mm |
| 1 | R17 | MEWID. 1% | 33R | 207 | RM 10,16 |
| 5 | R5,6,7,19,27 | MEWID. 1% | 1k0 | 207 | RM 10,16 |
| 1 | R12 | MEWID. 1% | 2k0 | 207 | RM 10,16 |
| 1 | R14 | MEWID. 1% | 2k8 | 207 | RM 10,16 |
| 1 | R13 | MEWID. 1% | 2k7 | 207 | RM 10,16 |
| 2 | R31 R25 | MEWID. 1% | 4k7 | 207 | RM 10,16 |
| 2 | R30 R4 | MEWID. 1% | 10k | 207 | RM 10,16 |
| 1 | R15 | MEWID. 1% | 11k5 | 207 | RM 10,16 |
| 2 | R10 R11 | MEWID. 1% | 17k9 | 207 | RM 10,16 |
| 2 | R33 R26 | MEWID. 1% | 39k | 207 | RM 10,16 |
| 2 | R23 R26 | MEWID. 1% | 47k | 207 | RM 10,16 |
| 4 | R21,29,16,22 | MEWID. 1% | 100k | 207 | RM 10,16 |
| 2 | R24 R28 | MEWID. 1% | 220k | 207 | RM 10,16 |
| 1 | R34 | MEWID. 1% | 270k | 207 | RM 10,16 |
| 1 | R32 | MEWID. 5% | 4M7 | 207 | RM 10,16 |
| 3 | R8 R9 R20 | MEWID. 5% | 10M | 207 | RM 10,16 |
| 2 | R1 R2 | ZEMENT 10% | 33R 5W | 208-8 | RM 30,48 |
| 1 | R3 | ZEMENT 10% | 27R 5W | 208-8 | RM 30,48 |
| 1 | P1 | SPINDELTRIM. | 500k stehend | | RM 2x2,54 |
| 1 | P2 | SPINDELTRIM. | 5k stehend | | RM 2x2,54 |
| 1 | F1 | SICHERUNG | 5x20 1A T | | RM 20,32 |
| 1 | F2 | SICHERUNG | TR8 0,4A T | | RM 5,08 |
| 1 | X1 | TASTER | SCHWARZ | | RM 2,54 |
| 1 | X3 | TASTER | ROT | | RM 2,54 |
| 1 | X2 | PIEZOSUMMER TM 05 | | | RM 7,62 |

**Patentansprüche**

1. Mobile Energiezelle bestehend aus
   einer Batterie (1) mit mindestens zwei auf der Oberseite der Batterie angeordneten Anschlußpolen (1a, 1b),

**gekennzeichnet durch**

einen an der Batterie (1) fixierbaren Aufsatz (2), der eine mit mindestens einem der Anschlußpole (1a, 1b) elektrisch verbundene selbsttätige Schutzschaltung (3), einen von außen zugänglichen, mit den Anschlußpolen (1a, 1b) und der Schutzschaltung (3) elektrisch verbundenen Anschluß (4) und eine mit den Anschlußpolen (1a, 1b) elektrisch verbundene Kontrollvorrichtung (5) aufweist, die Kontrollsignale abgibt.

2. Mobile Energiezelle nach Anspruch 1,
   **gekennzeichnet durch**
   eine Ummantelung (6), die den Aufsatz (2) und die Batterie (1) teilweise oder vollständig umhüllt, wobei der Anschluß (4) und die Ladebuchse (13) durch eine Aussparung (6a) der Ummantelung (6) von außen zugänglich sind.

3. Mobile Energiezelle nach einem der Ansprüche 1 oder 2,
   **dadurch gekennzeichnet, daß**
   der Aufsatz (2) auf die Oberseite der Batterie (1) aufsetzbar ist und mittels zwei Verbindungsschrauben (9) an der Batterie fixierbar ist.

4. Mobile Energiezelle nach einem der Ansprüche 1 bis 3,
   **dadurch gekennzeichnet, daß**
   der Anschluß (4) als Flachsteckdose ausgebildet ist und mit einer Sicherung gegen Verpolung geschützt ist.

5. Mobile Energiezelle nach einem der Ansprüche 1 bis 4,
   **dadurch gekennzeichnet, daß**
   der Anschluß (4) als Verbindung mit zwei Verriegelungszungen ausgebildet ist.

6. Mobile Energiezelle nach einem der Ansprüche 1 bis 5,
   **dadurch gekennzeichnet, daß**
   die Kontrollvorrichtung (5) an der Oberseite des Aufsatzes (2) befestigt ist und einen Taster (5a, 5a1) aufweist, bei dessen Betätigung der Ladezustand der Batterie (1) über eine optische Anzeige (5b, 5b1, 5b2, 5b3) ablesbar ist.

7. Mobile Energiezelle nach Anspruch 6,
   **dadurch gekennzeichnet, daß**
   die optische Anzeige (5b) vier Dioden aufweist.

8. Mobile Energiezelle nach einem der Ansprüche 6 oder 7,
   **dadurch gekennzeichnet, daß**
   die Kontrollvorrichtung (5) gegenüber der Oberseite des Aufsatzes (2) zurückversetzt angeordnet ist sowie durch ein flexibles Fenster (12) der Haube (11) betätigbar und ablesbar ist.

9. Mobile Energiezelle nach einem der Ansprüche 1 bis 8,
   **dadurch gekennzeichnet, daß**
   die elektrische Verbindung an den Anschlußpolen (1a, 1b) über schnell lösbare Schraubverbindungen (9) erfolgt.

10. Mobile Energiezelle nach einem der Ansprüche 1 bis 9,
    **dadurch gekennzeichnet, daß**
    die Schutzschaltung (3) den Stromkreislauf zum Verbraucher bei Unterschreiten einer vorbestimmten Spannung unterbricht.

11. Mobile Energiezelle nach einem der Ansprüche 1 bis 10,
    **dadurch gekennzeichnet, daß**
    der Anschluß (4) dreipolig ausgebildet ist, wobei beim Einstecken der Kontakt zuletzt verbindbar und beim Ausstecken zuerst lösbar ist, der eine Leitung für die Schutzschaltung (3) ist, die zeitverzögert nach Einschalten eines Verbrauchers aktivierbar ist.

**12.** Mobile Energiezelle nach einem der Ansprüche 1 bis 11,
**dadurch gekennzeichnet, daß**
der Anschluß (4) auch zum Laden der Batterie (1) geeignet ist.

**13.** Mobile Energiezelle nach einem der Ansprüche 1 bis 12,
**gekennzeichnet durch**
eine Wanne zum Schutz der Energiezelle gegen mechanische und thermische Einflüsse.

**14.** Mobile Energiezelle nach Anspruch 13,
**dadurch gekennzeichnet, daß**
die Wanne als flüssigkeitsdichte Auffangwanne ausgebildet ist, um auslaufende Batterieflüssigkeit aufzufangen.

**15.** Mobile Energiezelle nach einem der Ansprüche 1 bis 14,
**dadurch gekennzeichnet, daß**
die Batterie (1) und der Aufsatz (2) direkt an einen Verbraucher angeflanscht sind.

**16.** Mobile Energiezelle nach einem der Ansprüche 3 bis 15,
**dadurch gekennzeichnet, daß**
sich der Aufsatz (2) auf den Randabschnitt der Oberseite der Batterie (1) stützt und Entlüftungen der Batteriezellen frei läßt.

**17.** Mobile Energiezelle nach einem der Ansprüche 1 bis 16,
**dadurch gekennzeichnet, daß**
der Aufsatz (2) durch eine Bodenplatte (10) aus Kunststoff gebildet ist, an dem die Schutzschaltung (3), der Anschluß (4) und die Kontrollvorrichtung (5) befestigt sind, und welch durch eine Haube (11) abgedeckt ist.

**18.** Mobile Energiezelle nach einem der Ansprüche 13 bis 17,
**dadurch gekennzeichnet, daß**
die Ummantelung (6) als Tragetasche dient, wobei die Wanne innerhalb der Tragetasche angeordnet ist.

**19.** Mobile Energiezelle nach einem der Ansprüche 1 bis 18,
**gekennzeichnet durch**
eine Vielzahl von Batterien (1), auf die der Aufsatz (2) aufsetzbar ist.

**20.** Mobile Energiezelle nach einem der Ansprüche 1 bis 19,
**dadurch gekennzeichnet, daß**
die Schutzschaltung (3) bei Vorliegen eines externen Kurzschlußes den Stromkreislauf unterbricht.

**21.** Mobile Energiezelle nach einem der Ansprüche 1 bis 20,
**dadurch gekennzeichnet, daß**
eine eigene Ladebuchse (13) vorhanden ist, and die auch Kleinverbraucher anschließbar sind .

**22.** Mobile Energiezelle nach einem der Ansprüche 17 bis 21,
**dadurch gekennzeichnet, daß**
die Bodenplatte (10) den Aufsatz (2) gasdicht von der Batterie (1) trennt.

FIG. 1

EP 0 662 730 A1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-90 02432 (FAIRGRIEVE)<br><br>* Seite 5, Zeile 1 - Seite 10, Absatz 2; Ansprüche 1-16 *<br>--- | 1,6,10, 19 | H01M10/42<br>H01M2/10<br>H01M2/34<br>G01R31/36 |
| X | PATENT ABSTRACTS OF JAPAN<br>vol. 12 no. 469 (E-691) [3316]<br>,8.Dezember 1988<br>& JP-A-63 190263 (MATSUSHITA) 5.August 1988,<br>* Zusammenfassung *<br>--- | 1,6,8-10 | |
| X | US-A-5 095 259 (R.ROBY BAILEY) | 1,2,12, 13,18-20 | |
| Y | <br>* Spalte 17, Zeile 24 - Spalte 28, Zeile 4 *<br>--- | 4 | |
| Y | US-A-4 224 383 (STEPHEN TAYLOR)<br>* Spalte 1, Zeile 64 - Spalte 3, Zeile 21 *<br>--- | 4 | |
| X | DE-C-39 07 697 (DETA-AKKUMULATORENWERK GMBH)<br>* Spalte 4, Zeile 37 - Spalte 5, Zeile 15 *<br>--- | 1,2 | **RECHERCHIERTE SACHGEBIETE (Int.Cl.6)**<br><br>H01M<br>G01R |
| X | EP-A-0 546 872 (TEXAS INSTRUMENTS FRANCE)<br>* Seite 8, Zeile 27-37; Ansprüche 1-12 *<br>--- | 1-3 | |
| A | DE-A-32 01 758 (VARTA BATTERIE AG)<br>* Ansprüche 1-7 *<br>--- | 1,2 | |
| A | EP-A-0 355 461 (GNB INCORPORATED)<br>* Seite 5, Zeile 50 - Seite 7, Zeile 11 *<br>--- | 1 | |
| A | WO-A-91 06130 (COOKE)<br>--- | 1,18 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 27.April 1995 | De Vos, L |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-40 23 976 (SIEMENS AG)<br>* Ansprüche 1-4 *<br>----- | 1,4,15 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| DEN HAAG | 27.April 1995 | De Vos, L |